# EUROPÄISCHE PATENTANMELDUNG

(11) **EP 1 705 781 A1**
(43) Veröffentlichungstag der Anmeldung: **27.09.2006**
(21) Anmeldenummer: 05006402.1
(22) Anmeldetag: 23.03.2005
(51) Int. Cl.: H02K 15/00

(54) **Verfahren zur Lösung von Fremdablagerungen innerhalb einer elektrischen Maschine und elektrische Maschine**

(71) Anmelder: SIEMENS AKTIENGESELLSCHAFT, 80333 München (DE)
(72) Erfinder: Kowalski, Waldemar, 45472 Mülheim an der Ruhr (DE); Lehmann, Christoph, Dr., 47506 Neukirchen-Vluyn (DE); Murawa-Galen, Markus, 44623 Herne (DE); Pohlmann, Friedhelm, Dr., 45355 Essen (DE); Reinhardt, Helmut, 45470 Mülheim an der Ruhr (DE)

(57) **Zusammenfassung**

Fremdablagerungen (67) im Innern einer elektrischen Maschine (1) können deren Funktion erheblich beeinträchtigen. Entsprechend sieht ein Verfahren zur Lösung von Fremdablagerungen (67) innerhalb einer elektrischen Maschine (1) erfindungsgemäß vor, dass Ultraschallwellen (35) auf eine vorgegebene Stelle innerhalb der elektrischen Maschine (1) eingestrahlt werden. Dementsprechend weist eine elektrische Maschine (1), insbesondere in Form eines Generators oder Motors, einen Ultraschallsender (33) zur Einstrahlung von Ultraschallwellen (35) auf eine vorgegebene Stelle innerhalb der elektrischen Maschine (1) auf. Insbesondere ist der Ultraschallsender (33) derart angebracht, dass die Ultraschallwellen (35) auf eine vorgegebene Stelle an einer elektrischen Kontaktanordnung (7, 11), insbesondere einer Schleifringanordnung (11), insbesondere einer Schleifringwelle (41), einstrahlbar sind.

## Beschreibung

Die Erfindung betrifft ein Verfahren zur Lösung von Fremdablagerungen innerhalb einer elektrischen Maschine sowie eine elektrische Maschine.

Eine elektrische Maschine wandelt Energie um. Je nach Einsatz ist in der Elektrotechnik unter einer elektrischen Maschine ein Generator (Wandlung von mechanischer Energie in elektrische), ein Motor (Wandlung von elektrischer Energie in mechanische) oder ein Transformator (Spannungswandlung und galvanische Trennung zweier Wechselstromkreise) zu verstehen. Dazu weist eine elektrische Maschine in der Regel eine stromführbare Primärwicklung und eine stromführbare Sekundärwicklung auf, die in der Regel über Magnetfelder miteinander in Wechselwirkung stehen.

Dabei treten in der Regel ganz erhebliche Potentialunterschiede zwischen den Wicklungen auf, je nach Stromführung kann eine erhebliche Wärmeentwicklung entstehen, und bei Motoren und Generatoren sind drehende Teile vorhanden, die gelagert sind und elektrisch kontaktiert werden, in der Regel über so genannte Schleifringe. Fremdablagerungen können zu einer Verschlechterung der Isolierung der Potentiale, der Wärmeabfuhr, der Drehlagerung und der elektrischen Kontaktierung führen.

Üblich ist es bisher während eines Stillstandes der elektrischen Maschine bei Bedarf betroffene Komponenten bzw. von Fremdablagerungen befallene Stellen mechanisch oder chemisch zu reinigen. Dies ist zum Teil sehr aufwändig, da in der Regel die elektrische Maschine geöffnet werden muss. Zum Teil müssen Komponenten der elektrischen Maschine auseinander gebaut werden, oftmals ist eine von Fremdablagerungen befallene Stelle einer Reinigung nicht oder nur schwer zugänglich. Die Reinigung beansprucht in der Regel viel Zeit und verursacht Kosten.

Wünschenswert wäre eine Vereinfachung der Reinigung.

An dieser Stelle setzt die Erfindung an, deren Aufgabe es ist, ein Verfahren und eine Vorrichtung anzugeben, gemäß dem eine automatische Reinigung vorgegebener Stellen innerhalb der elektrischen Maschine möglich ist.

Betreffend das Verfahren wird die Aufgabe durch ein Verfahren zur Lösung von Fremdablagerungen innerhalb einer elektrischen Maschine gelöst, bei dem erfindungsgemäß Ultraschallwellen auf eine vorgegebene Stelle innerhalb der elektrischen Maschine eingestrahlt werden.

Unter Fremdablagerungen ist insbesondere Schmutz, beispielsweise in Form von Partikeln, Staub oder Öl zu verstehen. Unter einer elektrischen Maschine ist ein Generator, ein Motor oder ein Transformator zu verstehen.

Betreffend die Vorrichtung wird die Aufgabe durch eine elektrische Maschine gelöst, die erfindungsgemäß einen Ultraschallsender zur Einstrahlung von Ultraschallwellen auf eine vorgegebene Stelle innerhalb der elektrischen Maschine aufweist.

Die Erfindung geht von der Überlegung aus, dass der größte Teil der eingangs genannten Probleme durch eine automatische Reinigung behoben wird, wenn ein geeignetes Reinigungsmittel innerhalb der elektrischen Maschine angeordnet ist. Als Reinigungsmittel ist erfindungsgemäß ein Ultraschallsender vorgesehen. Dieser kann nämlich besonders einfach und kompakt innerhalb der elektrischen Maschine untergebracht werden und andererseits auf eine vorgegebene Stelle ausgerichtet werden, die für Fremdablagerungen anfällig ist. Die vorgegebene Stelle sollte deshalb vorzugsweise im Fokusbereich des Ultraschallsenders liegen, so dass eine auf die vorgegebene Stelle gerichtete Ultraschallwellenleistung eine ausreichend starke Erschütterung der Fremdablagerungen ergibt. Es wäre ausreichend, dass durch die eingestrahlten Ultraschallwellen die Fremdablagerungen zunächst gelockert werden. Weitere Betriebsbewegungen der elektrischen Maschine können vorteilhaft dazu führen, dass sich die Fremdablagerungen vollständig von der vorgegebenen Stelle und ihrer Umgebung lösen. Solche Betriebsbewegungen können beispielsweise Eigenschwingungen, Luftströme oder eine Zentrifugalkraft eines drehenden Teils innerhalb der elektrischen Maschine sein.

Durch eine Anbringung des Ultraschallsenders innerhalb der elektrischen Maschine wird eine Öffnung der elektrischen Maschine zur Reinigung überflüssig. Dies stellt eine erhebliche Zeitersparnis und Kostenersparnis beim Reinigungsvorgang dar.

Vorteilhafte Weiterbildungen der Erfindung sind den Unteransprüchen zu entnehmen und geben im Einzelnen vorteilhafte Möglichkeiten an, das Verfahren oder die elektrische Maschine im Rahmen des erläuterten Konzepts weiterzubilden.

Vorzugsweise werden die Ultraschallwellen während des Betriebes eingestrahlt. Das heißt die Säuberung erfolgt "online" ohne Betriebsunterbrechung. Dies führt zu einer höheren Verfügbarkeit der elektrischen Maschine, da deren Betrieb für die Reinigung nicht unterbrochen werden muss. Vielmehr tragen Betriebsbewegungen zur vollständigen Lösung der Fremdablagerungen bei.

Vorzugsweise werden die Ultraschallwellen in einer ferngesteuerten Weise eingestrahlt. Dazu weist die elektrische Maschine vorzugsweise eine mit dem Ultraschallsender gekoppelte Steuerung, insbesondere eine Fernsteuerung, auf. Dies hat den Vorteil, dass der Ultraschallsender nicht dauerhaft betrieben werden müsste, sondern in bevorzugten Betriebsstadien der elektrischen Maschine aktiviert werden könnte. Darüber hinaus ergibt sich die Möglichkeit einer Intensitätsregelung für die Ultraschallwellen, um je nach einem Ausmaß von Fremdablagerungen die Intensität der eingestrahlten Ultraschallwellen zu erhöhen oder zu erniedrigen. Im Zusammenhang damit kann auch eine Sensorik vorgesehen sein, die feststellt, ob und wie viele Fremdablagerungen auf einer bestimmten Stelle vorhanden sind. Dies führt besonders vorteilhaft zu einer Lebensdauererhöhung der elektrischen Maschine, da Fremdablagerungen, insbesondere in Form von Verschmutzungen sofort, d. h. bei ihrer Entstehung oder kurz danach, beseitigt werden.

Als besonders vorteilhaft erweist sich, dass in der Nähe der vorgegebenen Stelle Auffangmittel für gelöste Fremdablagerungen derart vorgesehen sind, dass die Fremdablagerungen im Auffangmittel festgehalten werden, so dass ein Transport der gelösten Fremdablagerungen in andere Teile der elektrischen Maschine vermieden ist.

Hinsichtlich der Vorrichtung führt die Erfindung auch auf eine elektrische Maschine in Form eines Generators oder Motors, bei dem eine Primärwicklung in Form einer Rotorwicklung auf einem Rotor und eine Sekundärwicklung in Form einer Statorwicklung auf einem Stator gebildet ist. Ein Generator oder ein Motor sind besonders anfällig für störende Einflüsse durch Fremdablagerungen.

Insbesondere ist ein Ultraschallsender bei einer elektrischen Maschine, insbesondere in Form eines Generators oder Motors, derart angebracht, dass die Ultraschallwellen auf eine vorgegebene Stelle an einer Primär- und/oder Sekundärwicklung einstrahlbar sind. Die Wicklungen sind besonders anfällig gegenüber schädlichen Einflüssen durch Fremdablagerungen, da diese die Isolierung der Wicklung beeinträchtigen können. Durch die Beseitigung von Fremdablagerungen lässt sich eine Kriechstrecke reduzieren und damit auch eine Lebensdauerreduzierung einer elektrischen Maschine bzw. die Gefahr von Gleitentladungen und Überschlägen vermeiden.

Vorteilhaft kann der Ultraschallsender auch derart angebracht sein, dass die Ultraschallwellen innerhalb eines Kühlsystems einstrahlbar sind. Auf diese Weise lassen sich Verstopfungen in Kühlkanälen vermeiden, so dass eine Reduzierung der Kühlung einer elektrischen Maschine vermieden ist.

Vorteilhaft kann ein Ultraschallsender auch derart angebracht sein, dass die Ultraschallwellen auf eine vorgegebene Stelle auf einer Kühloberfläche einstrahlbar sind. Dadurch lässt sich vorteilhaft eine Verschlechterung der Wärmeabfuhr durch eine durch Fremdablagerungen verschmutzte Oberfläche vermeiden, was zu einer Lebensdauerverlängerung bzw. zu einer Erhaltung des Wirkungsgrads der Kühloberfläche führt.

Vorteilhaft kann ein Ultraschallsender auch derart angebracht sein, dass die Ultraschallwellen auf eine vorgegebene Stelle in einem Spalt am oder zwischen Rotor und Stator einstrahlbar sind. Vorteilhaft kann ein Ultraschallsender auch derart angebracht sein, dass die Ultraschallwellen auf eine vorgegebene Stelle an einer elektrischen Kontaktanordnung einstrahlbar sind. Die Verschlechterung von elektrischen Kontakten durch Fremdablagerungen kann zu erheblicher Wärmeentwicklung in den Kontakten führen oder zu einer Funkenentwicklung. Eine dadurch hervorgerufene Senkung des Wirkungsgrades lässt sich durch das Lösen der Fremdablagerungen durch die Ultraschallwellen vermeiden. Insbesondere hat es sich als vorteilhaft erwiesen, eine Schleifringanordnung, zweckmäßigerweise eine Schleifringwelle, mit Ultraschallwellen zu beaufschlagen, da im Bereich einer Schleifringanordnung, insbesondere einer Schleifringwelle, ein Abrieb der Schleifringe zu besonders hohen Fremdablagerungen führen kann, welche in besonders drastischem Maße den elektrischen Kontakt verschlechtern. Dies betrifft vor allem sämtliche Motoren, die einen Schleifring aufweisen, beispielsweise auch einen Gleichstrommotor. Dies betrifft auch sämtliche Synchronmaschinen, bei denen ein Schleifring mit oder ohne Kommutator vorgesehen ist. Insbesondere bei mit Kommutator versehenen Schleifringen ist ein so genanntes Bürstenfeuer dadurch gering gehalten, dass Fremdablagerungen rechtzeitig gelöst werden.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Im Einzelnen zeigt die Zeichnung in:
- FIG 1: eine schematische Darstellung einer elektrischen Maschine in Form eines Generators mit einer besonders bevorzugten Auswahl von vorgegebenen Stellen, in deren Nähe ein Ultraschallsender zweckmäßig angebracht werden kann;
- FIG 2: eine schematische Seitenansicht einer Schleifring-anordnung bei der ein Ultraschallsender derart angebracht ist, dass die Ultraschallwellen auf vorgegebene Stellen einstrahlbar sind, die besonders anfällig für Fremdablagerungen in Form von Abrieb sind;
- FIG 3: eine Draufsicht der Schleifringanordnung von FIG 2.

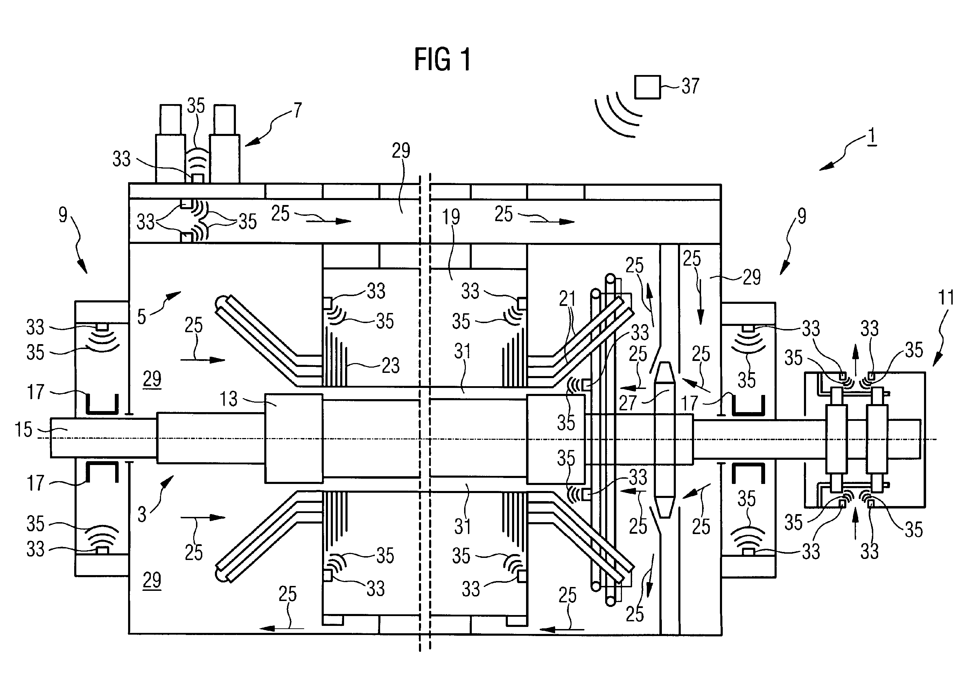

FIG 1 zeigt eine elektrische Maschine 1 in Form eines Generators in schematischer Ansicht. Diese weist einen Rotor 3 und einen Stator 5 auf. Der Rotor 3 weist eine Welle 15 mit einer auf der Welle 15 angeordneten Primärwicklung 13 in Form einer Rotorwicklung auf.

Der Stator 5 weist eine Sekundärwicklung 19 in Form einer Statorwicklung auf. Die Statorwicklung 19 ist insbesondere in Form von Statorleitern 21 in Form von Wicklungsleitern und Schaltleitern gebildet. Das vom Rotor 3 erzeugte magnetische Drehfeld erzeugt in den Statorleitern 21 durch den sich ändernden magnetischen Fluss einen induzierten Strom, der über einen Netzanschluss 7 an ein nicht näher dargestelltes Stromnetz abgegeben werden kann.

Der Rotor 3 ist in einem in einem Lagergehäuse 9 untergebrachten Lager 17 drehbar gelagert.

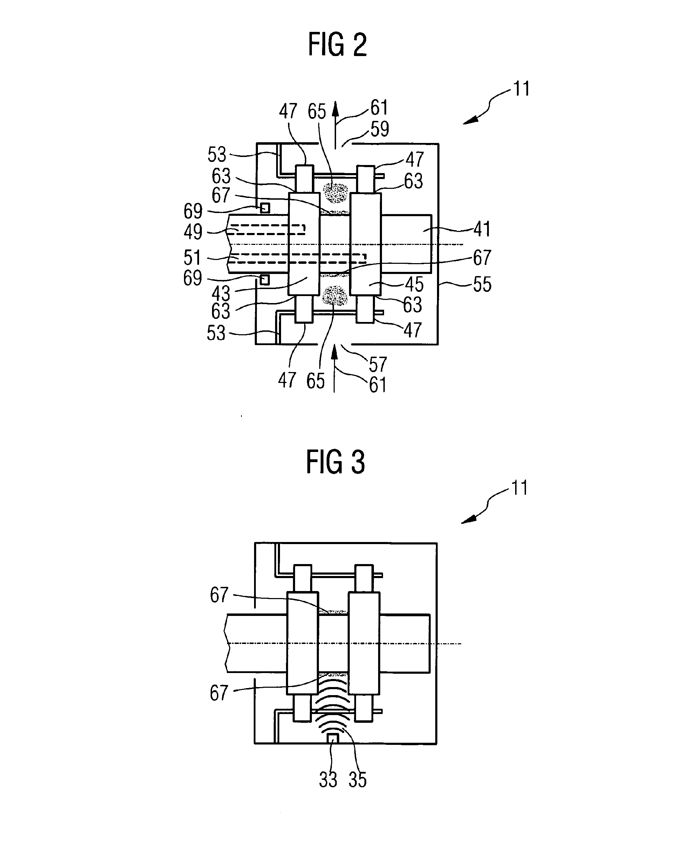

Eine Strombeaufschlagung der Rotorwicklung 13 erfolgt durch Kontaktierung der Rotorwicklung 13 mit einer Stromversorgung in einer Schleifringanordnung 11, die in Bezug auf die FIG 2 und FIG 3 näher dargestellt ist.

Eine Kühlung des Generators 1 erfolgt durch die Beaufschlagung von Kühlkanälen 29 mit einer durch einen Pfeil dargestellten Kühlgasströmung 25. Die Kühlgasströmung 25 wird insbesondere durch ein Lüftungsrad 27 erzeugt, das Kühlgas in zweckmäßiger Weise zur Erzeugung einer zirkulierenden Kühlgasströmung 25 im Gehäuse umwälzt.

Besonders anfällig für Fremdablagerungen sind solche vorgegebenen Stellen, an denen drehende Teile eng benachbart sind. Dabei handelt es sich insbesondere um vorgegebene Stellen bei einem Lager 17 des Rotors 3 oder im Bereich eines Spaltes 31 zwischen Rotor 3 und Stator 5.

Des Weiteren sind solche vorgegebenen Stellen anfällig, bei denen es bei Zunahme von Fremdablagerungen zu einer Erhöhung des Entladungspegels kommen kann. Dies sind insbesondere Stellen im Bereich der Statorwicklung 19 und dort insbesondere im Bereich der gegeneinander isolierten Bleche des einen ferromagnetischen Hohlzylinder bildenden Blechpakets. Hier kann es insbesondere zu einer Reduzierung von Kriechstrecken und damit zu einer Reduzierung der Lebensdauer bzw. der Gefahr von Überschlägen und Gleitentladungen kommen. Ganz allgemein kann es im Bereich der Wicklung zu einer Herabsetzung der Teilentladungseinsetzspannung und damit zu einer Erhöhung des Teilentladungspegels kommen.

Weiters sind vorgegebene Stellen für Fremdablagerungen anfällig, bei denen eine Verschlechterung von elektrischen Kontakten aufgrund der Fremdablagerungen entstehen kann. Dies ist insbesondere der Bereich des Netzanschlusses 7 und der Bereich des Schleifringanschlusses 11.

Weiters sind alle Kühloberflächen anfällig für Fremdablagerungen. Dazu gehören insbesondere Kühlkanäle 29 oder Gaskühlkanäle 23. Eine Verstopfung von Kühlkanälen in Folge von Fremdablagerungen kann eine Reduzierung der Generatorkühlung zur Folge haben. Generell führen Fremdablagerungen auf Kühlflächen zu einer Verschlechterung der Wärmeabfuhr durch die verschmutzte Kühlfläche und dies führt zu einer Lebensdauerreduzierung bzw. Verschlechterung des Wirkungsgrades.

In FIG 1 sind symbolisch im Bereich der oben genannten vorgegebenen Stellen Ultraschallsender derart angebracht, dass Ultraschallwellen auf die entsprechende vorgegebene Stelle einstrahlbar sind. Die in FIG 1 aufgezeigten Möglichkeiten können insgesamt, einzeln oder in einer bevorzugten Auswahl bei einem Generator 1 realisiert sein.

Je nach Bedarf ist ein Ultraschallsender 33 derart angebracht, dass die Ultraschallwellen 35 auf eine vorgegebene Stelle an einer Wicklung 19, innerhalb eines Kühlsystems 29, auf einer Kühloberfläche 23, in einem Spalt 31 zwischen Rotor und Stator oder an einer Kontaktanordnung 7 oder einer Schleifringanordnung 11 oder einem Lager 17 einstrahlbar sind.

Vorzugsweise kann ein Ultraschallsender 33 für die Aussendung von Ultraschallwellen 35 von einer Fernsteuerung 37 durch Aussendung eines Steuersignals 39 gesteuert werden. Dies betrifft vorzugsweise Zeit und Intensität einer Ultraschallwelle 35.

Besonders anfällig für Fremdablagerungen ist der Bereich der Schleifringanordnung 11, die in FIG 2 als Seitenansicht und in FIG 3 als Draufsicht näher dargestellt ist und im Folgenden näher erläutert ist.

Die Schleifringanordnung der FIG 2 zeigt im Einzelnen das Ende der Welle 15 des Generators 1 in Form einer Schleifringwelle 41 mit einem ersten Schleifring 43 zur Bildung eines ersten Pols und einem zweiten Schleifring 45 zur Bildung eines zweiten Pols mit zum ersten Pol entgegengesetzter Polarität. Der erste und zweite Schleifring 43, 45 sind jeweils mit einer feststehenden Bürste 47 einer Bürstenanordnung in Kontakt, die zu einer Strombeaufschlagung einer ersten Stromzuleitung 49 und einer zweiten Stromzuleitung 51 führen. Über die Stromzuleitung 49, 51 werden entsprechende Stränge einer Rotorwicklung 13 des Generators 1 strombeaufschlagt. Die Bürstenanordnung weist außerdem einen Bürstenträger 53 auf, der die Bürsten 47 hält und Strom auf die Bürsten 47 leitet.

Die Schleifringanordnung 11 weist außerdem ein Gehäuse 55 auf, das einen Lufteintritt 57 und Luftaustritt 59 für Kühlluft 61 aufweist.

Da es sich bei der Schleifringwelle 41 um ein sich gegenüber den Bürsten 47 drehendes Teil handelt, kommt es insbesondere im Andruckbereich 63 der Bürsten 47 und Schleifringe 45 zu einem auch von der Stromübertragung unterstützten Abrieb 65 in Form von feinen Bürstenpartikeln, die durch den Luftstrom 61 vorzugsweise zu einer Fremdablagerung 67 in Form einer Anhaftung im Bereich der Schleifringwelle 41 führen.

Die genannte Anhaftung stellt eine Fremdablagerung 67 dar und kann durch eine in FIG 3 dargestellte Anordnung eines Ultraschallsenders 33 jedenfalls gelöst werden, indem Ultraschallwellen 35 auf die Schleifringwelle 41 im Bereich zwischen den Schleifringen 43, 45 als vorgegebene Stelle eingestrahlt werden. Sofern die Anhaftungen 67 durch die Ultraschallwellen 35 nicht vollständig gelöst werden, so werden sie dennoch zumindest gelockert und insbesondere aufgrund der drehenden Bewegung der Schleifringwelle 41 durch eine Zentrifugalkraft gelöst. Ein Auffangmittel 69 in Form eines Filters oder einer Dichtung kann den Abrieb 65 und gelöste Fremdablagerungen 67 aufnehmen und verhindert insbesondere deren Eindringen in andere oder benachbarte Teile des Generators 1.

Während sich das neue Konzept als besonders nützlich für die Anwendung im Rahmen einer gemäß FIG 2 und FIG 3 erläuterten Schleifringanordnung 11 bei einem Generator 1 erweist und in diesem Sinne zu verstehen ist und beschrieben ist, so sollte dennoch klar sein, dass das Prinzip des neuen Konzepts, wie beansprucht, ebenfalls nützlich im Rahmen von anderen Schleifringanordnungen ist, welche außerhalb des Generatorbereichs liegen. Beispielsweise könnte das vorgestellte Konzept ebenso Anwendung finden bei einer Erregermaschine, die ebenfalls eine Schleifringanordnung zur Beaufschlagung einer Rotorwicklung 13 aufweist. Ein weiteres Beispiel wäre eine Schleifringanordnung eines Motors, insbesondere eine Schleifringanordnung mit Kommutator, wie sie bei einem Gleichstrommotor Verwendung findet. Dort ist ein im Rahmen der FIG 2 dargestellter Abrieb 65 noch aufgrund des Bürstenfeuers erhöht. Das beschriebene Konzept erweist sich insofern als umso wirksamer und vorteilhafter je höher die Gefahr der Verschmutzung bei einer Schleifringanordnung oder bei anderen im Rahmen der Detailbeschreibung genannten oder vergleichbaren vorbestimmten Stellen ist.

Fremdablagerungen 67 im Innern einer elektrischen Maschine 1 können deren Funktion erheblich beeinträchtigen. Entsprechend sieht ein Verfahren zur Lösung von Fremdablagerungen 67 innerhalb einer elektrischen Maschine 1 erfindungsgemäß vor, dass Ultraschallwellen 35 auf eine vorgegebene Stelle innerhalb der elektrischen Maschine 1 eingestrahlt werden. Dementsprechend weist eine elektrische Maschine 1, insbesondere in Form eines Generators oder Motors, einen Ultraschallsender 33 zur Einstrahlung von Ultraschallwellen 35 auf eine vorgegebene Stelle innerhalb der elektrischen Maschine 1 auf. Insbesondere ist der Ultraschallsender 33 derart angebracht, dass die Ultraschallwellen 35 auf eine vorgegebene Stelle an einer elektrischen Kontaktanordnung 7, 11, insbesondere einer Schleifringanordnung 11, insbesondere einer Schleifringwelle 41, einstrahlbar sind.

## Patentansprüche

1. Verfahren zur Lösung von Fremdablagerungen (67) innerhalb einer elektrischen Maschine,
**dadurch gekennzeichnet, dass**
Ultraschallwellen (35) auf eine vorgegebene Stelle innerhalb der elektrischen Maschine (1) eingestrahlt werden.

2. Verfahren nach Anspruch 1,
**dadurch gekennzeichnet, dass**
die Ultraschallwellen (35) während des Betriebes eingestrahlt werden.

3. Verfahren nach Anspruch 1 oder 2,
**dadurch gekennzeichnet, dass**
die Ultraschallwellen (35) in einer ferngesteuerten Weise eingestrahlt werden.

4. Elektrische Maschine,
**gekennzeichnet durch**
einen Ultraschallsender (33) zur Einstrahlung von Ultraschallwellen (35) auf eine vorgegebene Stelle innerhalb der elektrischen Maschine (1).

5. Elektrische Maschine (1) nach Anspruch 4,
**gekennzeichnet durch**
eine mit dem Ultraschallsender (33) gekoppelte Steuerung, insbesondere in Form einer Fernsteuerung (37).

6. Elektrische Maschine (1) nach Anspruch 4 oder 5,
**gekennzeichnet durch**
ein Auffangmittel (69) für von der vorgegebenen Stelle gelöste Fremdablagerungen (67).

7. Elektrische Maschine (1) nach einem der Ansprüche 4 bis 6 in Form eines Generators oder Motors, bei dem eine Primärwicklung (13) in Form einer Rotorwicklung auf einem Rotor (3) und eine Sekundärwicklung (19) in Form einer Statorwicklung auf einem Stator (5) gebildet ist.

8. Elektrische Maschine nach Anspruch 7,
**dadurch gekennzeichnet, dass**
der Ultraschallsender (33) derart angebracht ist, dass die Ultraschallwellen (35) auf eine vorgegebene Stelle an einer Primär- und/oder Sekundärwicklung (13, 19) einstrahlbar sind.

9. Elektrische Maschine nach Anspruch 7 oder 8,
**dadurch gekennzeichnet, dass**
der Ultraschallsender (33) derart angebracht ist, dass die Ultraschallwellen (35) auf eine vorgegebene Stelle innerhalb eines Kühlsystems (29) einstrahlbar sind.

10. Elektrische Maschine nach einem der Ansprüche 7 bis 9,
**dadurch gekennzeichnet, dass**
der Ultraschallsender (33) derart angebracht ist, dass die Ultraschallwellen (35) auf eine vorgegebene Stelle auf einer Kühloberfläche (13) einstrahlbar sind.

11. Elektrische Maschine nach einem der Ansprüche 7 bis 10,
**dadurch gekennzeichnet, dass**
der Ultraschallsender (33) derart angebracht ist, dass die Ultraschallwellen (35) auf eine vorgegebene Stelle in einem Spalt (31) am oder zwischen Rotor (3) und Stator (5) einstrahlbar sind.

12. Elektrische Maschine nach einem der Ansprüche 7 bis 11,
**dadurch gekennzeichnet, dass**
der Ultraschallsender (33) derart angebracht ist, dass die Ultraschallwellen (35) auf eine vorgegebene Stelle an einer elektrischen Kontaktanordnung (7, 11), insbesondere einer Schleifringanordnung (11), insbesondere einer Schleifringwelle (41) einstrahlbar sind.
